# FASCICULE DE BREVET EUROPEEN

(11) **EP 1 436 524 B1**
(45) Date de publication et mention de la délivrance du brevet: **23.08.2006**
(21) Numéro de dépôt: 02801362.1
(22) Date de dépôt: 10.10.2002
(51) Int. Cl.: F16F 13/14, B60G 7/00

(54) **ARTICULATION HYDROELASTIQUE ROTULEE**
HYDROELASTISCHES KUGELGELENK
HYDROELASTIC BALL JOINT

(30) Priorité: 16.10.2001 FR 0113345
(43) Date de publication de la demande: 14.07.2004
(73) Titulaire: Woco AVS S.A.S., 58302 Decize Cedex (FR)
(72) Inventeur: DE FONTENAY, Etienne, F-58300 Decize (FR); SOUYRI, Philippe, F-63260 Saint Gènes du Restz (FR)
(74) Mandataire: Abello, Michel
(86) Numéro de dépôt international: PCT/FR2002/003446
(87) Numéro de publication internationale: WO 2003/033936

(56) Documents cités:
- EP-A- 0 524 844
- EP-A- 1 046 833
- FR-A- 2 788 822
- FR-A- 2 817 007
- US-A- 3 013 808
- US-A- 5 172 894
- US-A- 5 887 859
- US-B1- 6 273 406

## Description

La présente invention concerne une articulation hydroélastique pour assembler deux pièces d'une structure et amortir des vibrations, transmises entre l'une et l'autre. Plus précisément, l'invention concerne une articulation du type comportant une armature externe et une armature interne ayant chacune un axe longitudinal, disposées l'une autour de l'autre et destinées à être fixées respectivement à l'une et à l'autre des pièces à assembler, et un ensemble faisant ressort hydroélastique disposé entre lesdites armatures de manière à permettre un déplacement transversal relatif entre lesdites armatures, ledit ensemble comportant un premier élément élastiquement déformable conformé de manière à délimiter entre lesdites armatures au moins un volume étanche contenant un liquide d'amortissement.

Ces articulations sont également désignées par les termes de support, cale, manchon, ou «bushing». Elles ont deux fonctions principales : offrir des degrés de liberté entre les pièces qu'elles assemblent et atténuer, dans une plus ou moins grande mesure selon l'application visée, la transmission de vibrations entre l'une et l'autre de ces pièces.

Dans le domaine de la construction des véhicules automobiles, ces articulations sont notamment utilisées pour l'assemblage et l'amortissement des organes de liaison au sol, comme les essieux ou les triangles de suspension des trains de roues, par rapport à la structure principale ou caisse du véhicule.

Dans ce cas, ce sont les modes de déplacement dans la direction longitudinale du véhicule dont l'amortissement est particulièrement visé, comme le mouvement de recul d'une roue au contact d'un obstacle. Des sources de vibrations connues au niveau des organes de liaison au sol d'un véhicule sont aussi le balourd des roues, la non-uniformité des pneumatiques en roulement, les défauts des disques de frein et les dispositifs d'assistance au freinage. Les vibrations des organes de liaison au sol sont généralement caractérisées par des fréquences de résonance relativement basses, par exemple entre 15 et 20 Hz, et des amplitudes relativement élevées, par exemple de l'ordre du millimètre ou plus, de sorte qu'elles sont perceptibles par les occupants du véhicule si incorrectement amorties.

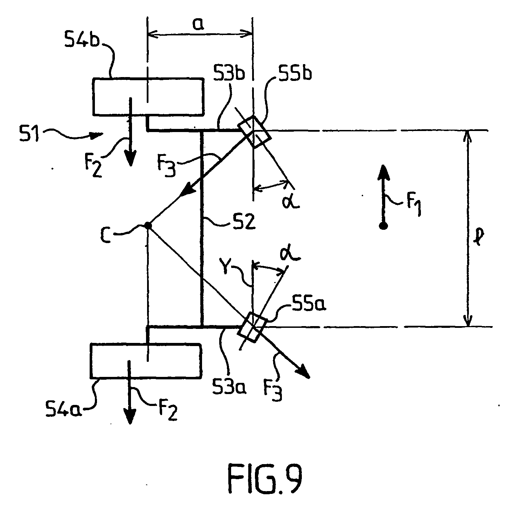

Par exemple, il est connu de fixer à l'aide de deux articulations de ce type un essieu déformable, dit en H, à la caisse d'un véhicule. Ces articulations assurent en particulier le maintien de l'essieu en virage. La figure 9 illustre un tel montage.

En référence à la figure 9, l'essieu 51 est un essieu arrière du type déformable. Il comporte une poutrelle transversale 52, rigide en flexion, et portant à ses deux extrémités un bras longitudinal respectif 53a, 53b. Chaque bras longitudinal 53a, 53b porte à son tour un support de roue respectif sur lequel est montée une roue respective 54a, 54b à une première extrémité, dite extrémité arrière, et une articulation 55a, 55b à l'autre extrémité, dite extrémité avant. Chaque articulation est fixée au bras longitudinal par l'une de ses armatures interne et externe et fixée à la caisse du véhicule, qui n'est pas représentée ici, par l'autre armature.

Lors d'un virage du véhicule, d'une part la force d'inertie latérale F1 s'exerçant sur la caisse et, d'autre part, la force de friction latérale F2 s'exerçant sur les roues entraînent, entre l'essieu 51 et la caisse, un déplacement qui peut se décomposer en une translation selon la direction transversale du véhicule et une rotation autour d'un axe vertical. Ce déplacement et la déformation conjointe de l'essieu peuvent rendre le véhicule survireur : les roues arrière ayant un pouvoir directeur très important augmentent le braquage, ce qui accroît à son tour les forces d'inertie, etc.

Pour corriger ce défaut, on a pensé à utiliser des articulations élastiques autobraqueuses dont les raideurs dans les différentes directions, notamment axiale et radiale, sont réglées et orientées par rapport à un système de référence lié au véhicule, de manière à engendrer un déplacement de l'essieu opposé. La figure 9 illustre ce type de montage, les axes longitudinaux des articulations 55a et 55b étant orientés dans un plan horizontal de manière à former un angle α par rapport à la direction transversale du véhicule Y, définie par les supports des roues 54a et 54b. Les flèches F3 représentent la sollicitation résultante supportée par chaque articulation.

Pour obtenir un bon niveau de performance dans ce type de montage en ce qui concerne le guidage de l'essieu, il faut que le rapport de la raideur radiale sur la raideur axiale des articulations soit le plus élevé possible, c'est-à-dire que le comportement de chaque articulation soit aussi voisin que possible du comportement d'une glissière axiale. Le centre de rotation théorique C de l'essieu, à l'intersection des droites d'action des forces F3, est alors déplacé à proportion vers le centre de rotation réel du véhicule. On peut obtenir une valeur élevée pour ce rapport, de manière connue entre environ 1 et 4, en concevant l'ensemble faisant ressort hydroélastique de manière appropriée:

Cependant, il n'est pas souhaitable de remplacer les articulations hydroélastiques par une véritable glissière car on perdrait alors tout amortissement des vibrations, ce qui est difficilement admissible du point de vue du confort du véhicule.

Ainsi, il se présente toujours un inconvénient en ce que les articulations du type susmentionné sont sujettes à un endommagement ou un vieillissement prématuré lorsqu'elles sont soumises à une sollicitation tendant à faire varier l'angle formé par les axes longitudinaux respectifs de l'armature interne et l'armature externe, c'est-à-dire à induire un mouvement de basculement relatif desdits axes longitudinaux autour d'une direction transversale perpendiculaire aux deux axes. Une telle déformation de l'articulation est encore appelée déformation conique.

Il apparaît clairement que les articulations 55a et 55b sont soumises à une déformation conique lors d'un débattement vertical des roues 54a et 54b au contact d'un terrain non plan. Il en résulte un autre inconvénient en ce que la nécessité de limiter la déformation conique dans des limites admissibles, par exemple avec un basculement maximal inférieur à 10°, impose une contrainte sur l'orientation qu'il est possible de donner à l'articulation, ce qui complique la conception des organes de liaison au sol et limite leurs performances.

Des sollicitations tendant à faire varier l'angle formé par les axes longitudinaux respectifs de l'armature interne et l'armature externe peuvent aussi apparaître dans nombre d'autres applications des articulations hydroélastiques.

La raison d'un tel endommagement est que la déformation conique sollicite le premier élément élastique en déformation au niveau de ses extrémités, par exemple en traction/compression, cisaillement, flexion, torsion ou autre combinaison de contraintes. Or, du fait qu'il délimite le volume étanche contenant le liquide d'amortissement, le premier élément élastique présente des parois d'extrémité ayant une dimension transversale et un espacement longitudinal imposés par le volume de fluide à contenir, lequel conditionne l'efficacité du fonctionnement hydroélastique. De ce fait, l'amplitude de la déformation transversale au niveau des parois d'extrémité lorsque l'articulation est soumise à une déformation conique est susceptible de faire travailler les parois d'extrémité d'une manière nuisible à la longévité de l'élastomère, par exemple en traction/compression transversale. On pourrait songer à modifier les dimensions, par exemple transversales, des parois, mais la nécessité de conserver les valeurs de raideur souhaitées dans toutes les directions limite cette possibilité.

De même, la précontrainte en compression transversale qu'il est possible d'appliquer au premier élément élastique au niveau de ses extrémités est réduite, du fait qu'une telle précontrainte tend, soit à écraser les parois d'extrémité et à réduire le volume disponible pour le liquide d'amortissement si la compression a lieu avant remplissage du volume, soit à distendre axialement les parois d'extrémité si la compression a lieu après remplissage du volume. En outre, une telle précontrainte présente d'importantes difficultés de mise en oeuvre.

Le document FR 2 784 152 décrit une articulation du type susmentionné qui comporte en outre un deuxième élément élastiquement déformable de conception similaire au premier et disposé entre le premier élément élastiquement déformable et l'une des armatures externe et interne, de manière à former un deuxième ressort hydroélastique monté en série avec le premier entre les deux armatures. Cependant, ce dispositif ne présente pas une solution satisfaisante à l'inconvénient précité puisqu'il double sensiblement l'encombrement et le coût de l'articulation sans empêcher, pour chacun des deux éléments élastiques, un vieillissement prématuré au niveau des parois d'extrémité sous déformation conique.

Le document US 5 887 859 décrit par ailleurs une articulation rotulée non hydraulique.

L'invention a pour but de fournir une articulation hydroélastique du type ci-dessus, qui présente une durée de fonctionnement prolongée sous déformation conique. L'invention vise aussi à fournir une articulation hydroélastique dont le rapport de la raideur radiale sur la raideur axiale soit préservé ou augmenté. L'invention vise en outre à fournir une articulation capable de supporter avec longévité une combinaison de torsion axiale et de déformation conique.

Un but secondaire de l'invention est de fournir une articulation ayant des caractéristiques dynamiques et géométriques adaptées pour l'assemblage des organes de liaison au sol à la structure principale d'un véhicule automobile, en particulier pour l'amortissement des déplacements de ces organes selon la direction transversale à l'articulation.

Pour cela, l'invention fournit une articulation hydroélastique du type susmentionné, comportant en outre un deuxième élément élastiquement déformable disposé entre ledit ensemble faisant ressort hydroélastique et une première desdites armatures externe et interne, caractérisée par le fait que le deuxième élément élastiquement déformable présente une dimension longitudinale inférieure à une dimension longitudinale correspondante du premier élément élastiquement déformable, de manière à limiter une déformation transversale dudit premier élément élastiquement déformable lors d'un basculement relatif des axes longitudinaux desdites armatures autour d'au moins un axe transversal de basculement.

La raideur de chaque élément élastique sous déformation conique, dite raideur conique, est globalement proportionnelle au carré de sa dimension longitudinale. L'invention permet donc de distribuer la déformation résultant d'un basculement relatif des axes longitudinaux des armatures de manière majoritaire sur le deuxième élément déformable, dont la raideur correspondante est plus faible, et qui réalise ainsi une fonction de rotule élastique à souplesse axiale. La déformation du premier élément élastiquement déformable est donc réduite d'autant. Les deux éléments élastiquement déformables se comportent de manière analogue à deux ressorts montés en série. Ainsi, la déformation conique totale imposée à l'articulation se répartit entre les deux éléments déformables en fonction, par exemple sensiblement à proportion inverse, de leurs raideurs respectives. Grâce à la conception de l'articulation selon l'invention, on obtient une déformation conique respective pour le deuxième élément élastiquement déformable valant au moins 55% de la déformation conique totale imposée à l'articulation entre les armatures externe et interne. Avantageusement, le deuxième élément élastiquement déformable absorbe au moins 60% de la déformation conique totale imposée à l'articulation et de préférence 80% ou plus de cette déformation totale. De manière correspondante, le premier élément élastiquement déformable supporte au plus 45% de la déformation conique totale, avantageusement au plus 40% et de préférence 20 % ou moins de cette déformation totale.

De préférence, une armature intermédiaire est disposée entre lesdits premier et deuxième éléments élastiquement déformables, lesdits premier et deuxième éléments élastiquement déformables étant adhérisés sur ladite armature intermédiaire. Ainsi, le deuxième élément élastiquement déformable n'interfère pas avec le volume de liquide d'amortissement, de sorte que son fonctionnement est totalement indépendant des variations de pression du liquide. Cette conception est aussi particulièrement avantageuse dans le cas d'une articulation devant travailler en torsion axiale.

Au sens de l'invention, on entend par adhérisation de deux éléments la réalisation d'une liaison intime entre la matière des deux éléments avec ou sans ajout d'une matière intercalaire de liaison, aussi bien par collage, vulcanisation, soudage ou autre.

Selon une réalisation particulière de l'invention, la première armature et l'armature intermédiaire présentent chacune un renflement périphérique respectif au niveau de surfaces en contact avec ledit deuxième élément élastiquement déformable de manière à solliciter ledit deuxième élément élastiquement déformable en cisaillement entre lesdits renflements périphériques lors dudit basculement relatif des axes des armatures externe et interne, le deuxième élément élastiquement déformable étant aussi adhérisé sur la première armature.

De préférence, le premier élément élastiquement déformable présente deux parois d'extrémité de manière à définir ledit volume étanche entre lesdites parois d'extrémité, ledit premier élément élastiquement déformable étant muni d'une armature périphérique de rigidification au moins au niveau desdites parois d'extrémité pour recevoir une armature par emmanchement sans adhérisation, de manière à assurer une étanchéité dudit volume de liquide d'amortissement.

Avantageusement, lesdites parois d'extrémité relient de manière étanche l'armature intermédiaire et une seconde desdites armatures externe et interne de manière à définir ledit volume étanche entre l'armature intermédiaire et ladite seconde armature, ledit premier élément élastiquement déformable recevant par emmanchement sans adhérisation la plus externe parmi l'armature intermédiaire et la seconde armature.

De préférence, le volume étanche est divisé en au moins deux chambres opposées selon une première direction transversale définissant une direction d'amortissement hydraulique dudit ensemble faisant ressort hydroélastique, ledit ensemble comportant un moyen pour mettre en communication lesdites chambres, de manière à engendrer un amortissement hydraulique desdites vibrations transmises entre lesdites armatures au moins selon ladite première direction transversale.

Dans ce cas, l'ensemble faisant ressort hydroélastique fait fonction de ressort à amortissement hydraulique parce que son fonctionnement fait appel à une circulation de liquide entre les deux chambres pour engendrer un amortissement des vibrations transmises entre lesdites armatures selon ladite première direction transversale. Schématiquement, lorsqu'une sollicitation vibratoire est exercée sur l'une des armatures, au moins selon la direction d'amortissement définie, celle-ci entraîne une déformation élastique du premier élément déformable, une variation du volume des chambres, une différence de pression entre elles et, finalement, un écoulement de liquide d'amortissement par le moyen de mise en communication. Cependant, en raison de l'inertie du liquide, cet écoulement est déphasé par rapport à la force excitatrice, ce qui est à l'origine d'un amortissement de la sollicitation transmise à l'autre armature.

Dans ce cas, selon une caractéristique particulière de l'invention, le premier élément élastiquement déformable présente deux bossages longitudinaux reliant lesdites parois d'extrémité de manière à séparer lesdites deux chambres, lesdits moyens pour mettre en communication les deux chambres comportant au moins une lèvre de clapet fixée à au moins l'un desdits bossages longitudinaux de manière à venir en contact avec ladite armature la plus externe parmi l'armature intermédiaire et la seconde armature, ladite lèvre de clapet étant apte à se replier de manière à mettre lesdites chambres en communication lorsqu'une différence de pression entre lesdites chambres dépasse une valeur de seuil.

Avantageusement, le premier élément élastiquement déformable présente deux butées en saillie sensiblement au centre de chaque chambre pour limiter un débattement entre la seconde armature et l'armature intermédiaire selon ladite première direction transversale.

De préférence dans ce cas, les butées sont précontraintes en compression transversale entre l'armature intermédiaire et la seconde armature.

Selon une autre caractéristique particulière de l'invention, le deuxième élément élastiquement déformable présente une raideur plus faible dans au moins une seconde direction transversale de manière à définir, perpendiculairement à ladite seconde direction transversale, un axe transversal de basculement préférentiel pour ledit basculement relatif des axes des armatures externe et interne. Selon les applications visées, on prévoit que la première direction transversale et la seconde direction transversale sont parallèles ou qu'elles forment un angle.

Avantageusement dans ce cas, le deuxième élément élastiquement déformable présente au moins deux alvéoles sensiblement longitudinales et opposées dans ladite seconde direction transversale. Cette conception permet de moduler la raideur du deuxième élément déformable en fonction des directions transversales.

De préférence, les premier et deuxième éléments élastiquement déformables sont obtenus en une seule étape de moulage. Cette possibilité est particulièrement avantageuse pour la réduction de coût et de temps de fabrication de l'articulation qui en résulte.

Selon une réalisation particulière de l'invention, l'armature interne est de forme globalement tubulaire et présente une section de paroi épaissie et/ou élargie au niveau d'au moins l'une de ses extrémités longitudinales pour offrir une surface de contact accrue avec la pièce à laquelle ladite armature interne doit être fixée ou avec un moyen pour fixer ladite armature interne à ladite pièce.

Selon une réalisation particulière, l'articulation hydroélastique selon l'invention présente au moins une partie externe apte à s'appuyer sur l'une desdites pièces à assembler pour empêcher une déformation de l'articulation au-delà d'une amplitude limite prescrite.

L'invention vise également à proposer un essieu arrière de véhicule muni d'articulations hydroélastiques pour relier ledit essieu à la structure d'un véhicule en obtenant un effet d'autobraquage pour corriger un déplacement et/ou une déformation de cet essieu lors d'un virage.

Pour cela, l'invention fournit un essieu pour véhicule automobile comportant une poutrelle portant symétriquement à chacune de ses extrémités un support de roue respectif, ladite poutrelle étant munie symétriquement de deux articulations pour assembler ladite poutrelle à une structure principale d'un véhicule automobile et amortir des vibrations, caractérisé par le fait que lesdites articulations sont des articulations hydroélastiques selon l'invention.

De préférence dans ce cas, lesdites articulations sont fixées à ladite poutrelle de manière qu'un axe respectif de chacune desdites articulations forme un angle supérieur à 20° avec une direction définie par les deux supports de roue.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une vue coupe longitudinale selon la ligne I-I de la figure 2 d'une articulation hydroélastique selon un premier mode de réalisation de l'invention,
- la figure 2 est une vue de l'articulation de la figure 1 en coupe transversale selon la ligne II-II de la figure 1,
- la figure 3 est une vue analogue à la figure 2 d'une articulation hydroélastique selon un deuxième mode de réalisation de l'invention,
- la figure 4 est une vue en coupe longitudinale d'une articulation hydroélastique selon un troisième mode de réalisation de l'invention, la demi-vue supérieure et la demi-vue inférieure étant des coupes selon deux demi-plans axiaux mutuellement perpendiculaires,
- la figure 5 est une vue en perspective de plusieurs armatures de l'articulation de la figure 1,
- la figure 6 est une vue en coupe longitudinale d'une articulation hydroélastique selon un quatrième mode de réalisation de l'invention,
- les figures 7, 8 et 9 représentent en vue de dessus trois modes de réalisation d'un essieu selon l'invention.

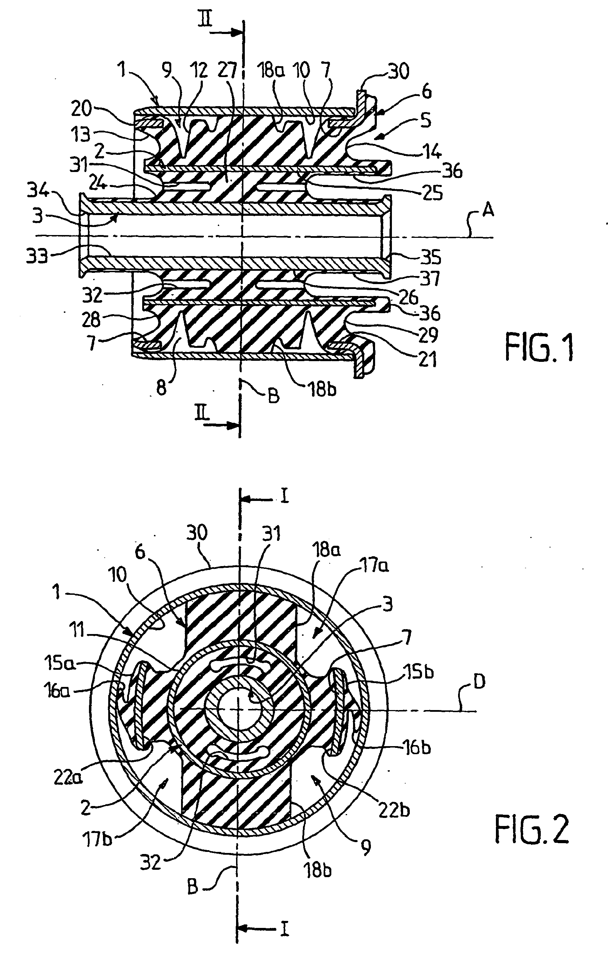

En référence aux figures 1, 2 et 5, on décrit maintenant un premier mode de réalisation de l'articulation hydroélastique selon l'invention.

Dans ce mode de réalisation, l'articulation est de forme extérieure sensiblement cylindrique et possède une armature externe 1, une armature intermédiaire 2 et une armature interne 3, toutes trois sensiblement cylindriques et coaxiales d'axe A. Ces armatures sont rigides et faites par exemple en métal ou en plastique. Les armatures externe 1 et interne 3 sont destinées à être fixées respectivement à deux pièces d'une structure (non représentées) pour assembler ces pièces et amortir les transmissions de vibrations entre elles. Pour faciliter le montage de l'articulation entre les deux pièces, l'armature interne 3 dépasse longitudinalement hors de l'armature externe 1 aux deux extrémités de l'articulation.

Entre les armatures intermédiaire 2 et externe 1 est monté un ensemble 5 faisant ressort à amortissement hydraulique formé par un premier élément élastiquement déformable 6 en une composition d'un ou plusieurs élastomère(s) muni d'une armature noyée 7, et par un liquide d'amortissement hydraulique 8 remplissant un volume étanche 9 défini entre l'élément déformable 6 et la surface intérieure 10 de l'armature externe 1. L'élément déformable 6 présente un forme globale de manchon cylindrique creux adhérisé par sa surface intérieure sur la surface extérieure 11 de l'armature intermédiaire 2 et évidé sur sa surface extérieure 12 pour former le volume 9.

La conformation extérieure de l'élément déformable 6 est la suivante : l'élément déformable 6 est évidé dans une partie centrale entre ses deux extrémités axiales, de manière à former au niveau de ses extrémités axiales deux parois annulaires 13 et 14 joignant les armatures intermédiaire 2 et externe 1 pour fermer de manière étanche le volume 9. Deux bossages axiaux diamétralement opposés 15a et 15b joignent l'une et l'autre des parois 13 et 14 de manière à diviser l'évidement central en deux chambres sensiblement semi-annulaires 17a et 17b symétriques par rapport à un plan contenant l'axe A de l'articulation. Les deux chambres 17a et 17b sont diamétralement opposées selon une direction B qui définit la direction d'amortissement hydraulique de l'ensemble 5.

Le fond de chaque chambre 17a et 17b est formé avec une excroissance respective 18a et 18b en saillie radialement vers l'extérieur depuis le centre de la chambre et en butée contre la surface intérieure 10 de l'armature externe 1. Les excroissances 18a et 18b accroissent la raideur de l'élément déformable 6 dans la direction B. Elles sont conçues avec une extension radiale supérieure au rayon de l'armature externe 1 au moment du moulage de l'élément déformable 6, de manière à être précontraintes en compression par l'armature externe 1 après assemblage de celle-ci sur l'articulation, comme il sera expliqué plus bas. Les excroissances 18a et 18b empêchent aussi une déformation excessive de l'élément déformable 6 et un endommagement résultant des parois 13 et 14 lorsque l'articulation est soumise à une sollicitation radiale très importante.

Les deux bossages 15a et 15b sont munis sur leur arête axiale respective d'une lèvre souple 16a et 16b formant clapet de surpression. Au repos, les lèvres 16a et 16b sont en contact contre la surface intérieure 10 de l'armature externe 1 de manière à isoler les deux chambres 17a et 17b. Les deux lèvres 16a et 16b ont une orientation hélicoïdale dans un même sens de rotation autour de l'axe A. En cas de sollicitation de l'articulation dans une direction radiale, se traduisant par une surpression suffisante dans l'une des chambres, par exemple la chambre 17a, l'une de ces lèvres, 16b selon l'exemple, est poussée dans le sens de son enroulement, ce qui entraîne sa flexion contre le bossage qui la porte, 15b selon l'exemple, et l'ouverture d'une communication entre les deux chambres, de sorte que la pression de liquide peut s'équilibrer entre elles. L'autre lèvre, 16a selon l'exemple, étant au contraire poussée par la surpression de liquide dans le sens de son déroulement, est maintenue contre l'armature externe 1 et n'ouvre pas de communication entre les deux chambres. En cas de sollicitation dans le sens inverse, le fonctionnement des deux lèvres 16a et 16b est permuté.

La différence de pression à partir de laquelle les lèvres de clapet 16a et 16b s'ouvrent peut être adaptée par une conception correspondante de celles-ci, en réglant leur extension axiale et radiale, leur épaisseur et la nature de la matière élastique utilisée. Dans les articulations hydroélastiques connues, on utilise de clapets de surpression aptes à s'ouvrir sous très forte sollicitation de l'articulation pour éviter son éclatement. Ces clapets connus ont donc une fonction de sécurité. Dans ce mode de réalisation, les lèvres de clapet 16a et 16b servent non seulement à assurer la sécurité de fonctionnement de l'articulation, mais aussi à permettre la circulation du liquide entre les deux chambres en fonctionnement normal. On choisit de préférence pour les lèvres de clapet 16a et 16b une basse pression d'ouverture, c'est-à-dire inférieure aux valeurs employées dans les clapets de sécurité des articulations hydroélastiques traditionnelles. Pour cela, la surface des lèvres de clapet 16a et 16b est accrue en augmentant leurs longueurs axiale et fléchissante et en réduisant la précontrainte radiale et l'épaisseur des lèvres. Si on le désire, la pression d'ouverture peut ainsi être rendue nulle ou sensiblement nulle. En variante, on peut prévoir que les lèvres de clapet 16a et 16b ménagent, en position de repos ou de manière permanente, un passage de fuite limité entre les deux chambres.

L'élément déformable 6 est pourvu d'une armature 7 noyée dans la masse d'élastomère. L'armature 7 consiste en une portion de tube de sensiblement même longueur que l'armature externe 1, pourvue dans sa partie centrale de deux larges ouvertures sensiblement semi-annulaires correspondant à l'emplacement des chambres 17a et 17b. L'armature 7 forme donc deux bagues 20 et 21 noyées à la périphérie des parois 13 et 14 respectivement, lesquelles bagues sont jointes par deux bandes 22a et 22b parallèles à l'axe A, retreintes radialement dans leur partie centrale et noyées dans les bossages 15a et 15b respectivement. L'armature 7 présente une portion d'extrémité adjacente à la bague 21, repliée perpendiculairement vers l'extérieur de manière à former un rebord périphérique 30. L'élément déformable 6 comporte aussi, sur la face extérieure des parois d'extrémité 13 et 14, deux évidements annulaires 28 et 29 formés dans la masse de l'élastomère, entre l'armature intermédiaire 2 et l'armature noyée 7.

La fermeture du volume 9 se fait par emmanchement à force de l'armature externe 1 sur l'élément déformable 6 après remplissage par le liquide d'amortissement, par exemple du glycol. Le remplissage peut être effectué par exemple par immersion de l'articulation dans le liquide. Lors de l'emmanchement de l'armature externe 1, les deux bagues 20 et 21 assurent une forte raideur radiale de l'élément déformable 6 pour assurer un contact étanche avec l'armature externe 1 et empêchent d'écraser les parois 13 et 14. L'élément déformable 6 est engagé axialement dans l'armature externe 1 par l'extrémité correspondant à la bague 20 et jusqu'à ce que le rebord 30, qui est en saillie radiale par rapport à l'armature externe 1, vienne en butée contre l'armature externe 1. L'élément déformable 6 n'est pas adhérisé sur l'armature 1 de sorte que les excroissances 18a et 18b ne travaillent pas en traction. Optionnellement, on réalise au moment de l'emmanchement de l'armature externe 1 en immersion, une précontrainte transversale des parois 13 et 14, par exemple par dudgeonnage de l'armature intermédiaire 2.

L'ensemble 5 faisant ressort à amortissement hydraulique formé entre l'armature externe 1 et l'armature intermédiaire 2 fonctionne selon la technique connue, une circulation de liquide entre les deux chambres 17a et 17b étant engendrée lors des débattements relatifs entre les armatures 1 et 3 selon la direction B. Il est à noter que chaque chambre 17a et 17b forme un espace connexe, le fluide pouvant passer autour de l'excroissance respective 18a et 18b en saillie au centre de la chambre.

L'ensemble 5 est conçu en soi pour avoir un rapport élevé entre la raideur radiale et la raideur axiale. Les raideurs axiale et radiale sont réglées principalement par la géométrie de l'élément déformable 6, notamment par le dimensionnement des parois d'extrémité 13 et 14, des excroissances 18a et 18b, et des bossages 15a et 15b. Par exemple, les raideurs axiale et radiale augmentent lorsqu'on accroît la dimension transversale de l'élément 6. Selon la technique connue, on peut aussi faire appel à des effets de saturation sous contrainte de l'élastomère pour adapter localement son comportement élastique.

En variante, il est possible de ne pas précomprimer les excroissances 18a et 18b contre l'armature 1 et même de les concevoir plus courtes de manière qu'elles n'atteignent pas l'armature 1 au repos et ne viennent en butée contre celle-ci qu'à partir d'un certain seuil de déformation transversale.

Optionnellement, on peut prévoir un canal de communication de section réduite entre les deux chambres 17a et 17b pour engendrer une résonance de pression à une fréquence de résonance donnée, selon la technique connue.

Entre les armatures intermédiaire 2 et interne 3 est monté un deuxième élément élastiquement déformable 24 en une composition d'un ou plusieurs élastomère(s) adhérisé sur la surface intérieure 25 de l'armature intermédiaire 2 et sur la surface extérieure 26 de l'armature interne 3. L'élément déformable 24 forme un manchon 27 qui remplit sensiblement l'espace radial entre les armatures intermédiaire 2 et interne 3 sur une longueur plus petite que la longueur de l'élément déformable 6. Au sens de l'invention, la dimension longitudinale de l'élément déformable 24 est la longueur de la partie de l'élément déformable 24 qui est soumise à déformation transversale lors d'un basculement relatif des axes des armatures 1 et 3, c'est-à-dire la dimension axiale du manchon 27 qui remplit sensiblement l'espace radial entre les armatures intermédiaire 2 et interne 3. A ce titre, les parties de l'élément déformable 24 qui ne sont pas soumises à déformation transversale, comme les parties de film 36 et 37, ne sont pas à prendre en compte pour déterminer la dimension longitudinale de l'élément déformable 24.

Ainsi, l'élément déformable 24 forme un ressort qui oppose une raideur plus faible que l'élément déformable 6 lors d'une déformation conique de l'articulation. L'élément déformable 24 absorbe donc la majeure partie de la déformation transversale engendrée lorsqu'on incline les axes des deux armatures 1 et 3 l'un par rapport à l'autre, quel que soit l'axe transversal de basculement. Sa raideur correspondante est d'autant plus faible que sa longueur axiale est réduite.

Deux alvéoles 31 et 32 sont ménagées longitudinalement dans l'épaisseur de l'élément déformable 24 et diamétralement opposées selon la direction B, pour réduire localement la raideur radiale de l'élément déformable 24 dans cette direction et définir ainsi, perpendiculairement à la direction B, un axe préféré D de basculement relatif entre les axes des armatures 1 et 3. Sur la figure 2, les alvéoles 31 et 32 sont représentées comme traversant l'élément déformable 24 sur toute sa longueur. En variante, sur la figure 1, chaque alvéole 31 et 32 est formée de deux demi-alvéoles s'étendant longitudinalement face à face depuis les deux extrémités de l'élément déformable 24 sans se rejoindre au milieu.

Lors d'une déformation conique de l'articulation autour de l'axe préféré D de basculement, la raideur opposée par l'élément déformable 24 est encore plus faible que dans les autres directions, et la sollicitation transversale de l'élément déformable 6 est encore plus réduite. Cependant, l'utilisation de l'articulation n'est pas forcément limitée aux déformations coniques autour de l'axe préféré D de basculement, car l'élément déformable 24 permet aussi d'absorber la déformation correspondante pour toute direction de basculement.

L'élément déformable 24 étant adhérisé sur les deux armatures 2 et 3, il peut aussi travailler en torsion axiale. L'élément déformable 24 permet aussi de préserver ou d'accroître le rapport de la raideur radiale de l'articulation sur sa raideur axiale. On obtient pour ce rapport des valeurs comprises par exemple entre 5 et 9, la valeur la plus basse correspondant à la direction radiale des alvéoles, et la valeur la plus haute à la direction radiale perpendiculaire. L'élément déformable 24 remplit donc une fonction de rotule élastique munie d'une certaine souplesse axiale. L'élément déformable 24 absorbe ainsi une partie des vibrations.

L'armature intermédiaire 2 est complètement recouverte par la matière élastique des éléments déformables 6 et 24. En effet, le manchon 27 formé par l'élément déformable 24 entre l'armature intermédiaire 2 et l'armature interne 3 sur une longueur axiale plus courte que celle de l'armature intermédiaire 2, dont la longueur est sensiblement égale à celle de l'élément déformable 6, se prolonge au niveau des extrémités de l'armature intermédiaire 2 par des parties de film mince 36 qui recouvrent la partie restante de la surface interne 25 jusqu'à se relier continûment avec l'élément déformable 6. Le film de matière 36 est obtenu par exemple en moulant en une seule étape les deux éléments déformables 6 et 24. L'armature intermédiaire 2 est ainsi protégée de l'environnement extérieur et de la corrosion.

De même, l'élément déformable 24 se prolonge au niveau des portions d'extrémité de l'armature interne 3 par des parties de film mince 37 qui recouvrent périphériquement l'armature interne 3 jusqu'aux extrémités 34 et 35.

L'armature interne 3 présente un espace central axial 33 qui permet d'y engager une vis pour la fixation de ladite armature à une pièce. La paroi de l'armature interne 3 est évasée et épaissie au niveaux de ses deux extrémités 34 et 35 de manière à accroître la surface de contact avec la vis et/ou la pièce, ce qui permet d'assurer une fixation solide et résistante aux sollicitations en rotation axiale. Une telle déformation des extrémités de l'armature 3 est obtenue à froid après moulage des éléments élastiques de l'articulation, en engageant un outil rotatif dans l'extrémité d'une ébauche de l'armature 3 qui a initialement la forme d'un tube uniforme. Le document EP 524 844 décrit cette technique de formage.

L'épaississement des extrémités 34 et 35 de l'armature interne 3 procure un avantage en termes d'encombrement, de poids et de prix de l'articulation. En effet, par rapport à une armature interne qui aurait un diamètre constant sensiblement égal au diamètre des extrémités épaissies 34 et 35, on constate que l'armature interne 3 présente un diamètre et une masse plus petits au niveau de la partie centrale de l'armature, tandis que les performances de fixation de l'armature interne sont sensiblement les mêmes dans les deux cas. Pour une performance de fixation donnée, la réduction du diamètre de l'armature dans sa partie centrale permet à son tour de réduire le volume de l'élément déformable 24 et donc de réduire le volume de l'ensemble de l'articulation tout en conservant des taux de déformation conique admissibles similaires.

L'obtention de cet épaississement de paroi par formage à froid après moulage des éléments élastiques est également avantageux, car l'armature interne est encore à l'état d'ébauche tubulaire de diamètre uniforme, au moins au niveau de ses extrémités, lors de l'étape de moulage. Cette forme régulière facilite la conception des moules, notamment le déplacement des tiroirs, et facilite donc le moulage.

Le rebord 30 formé par l'armature 7 permet de réaliser un appui contre un élément extérieur à l'articulation pour empêcher une déformation axiale de l'articulation au-delà d'une amplitude limite prescrite. Une telle butée de limitation est souvent souhaitable pour des raisons de sécurité, notamment dans les cas exceptionnels de sollicitation extrême de l'articulation. De manière correspondante, on peut aussi munir l'articulation d'une butée de limitation externe selon la direction radiale ou angulaire.

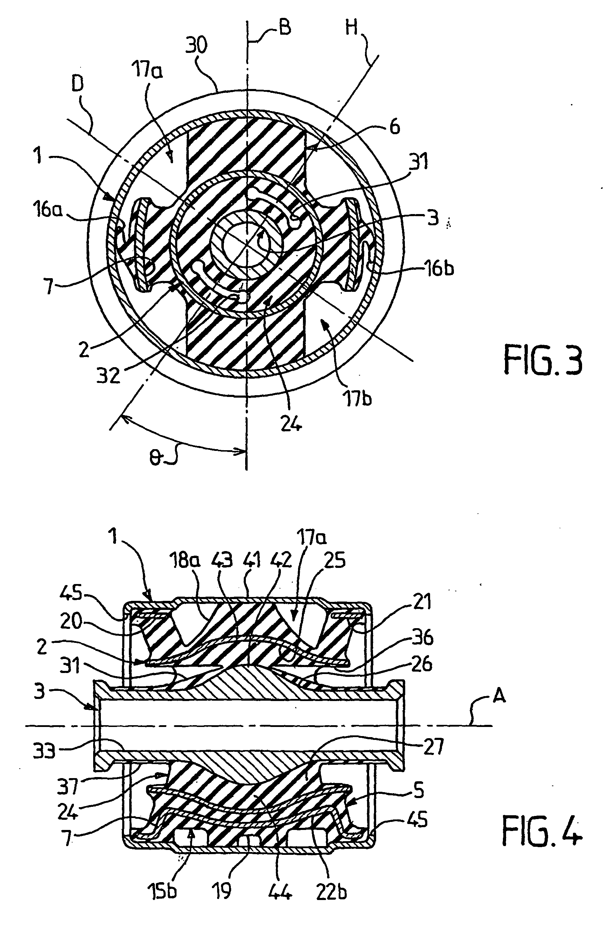

Dans le mode de réalisation décrit ci-dessus, la direction d'amortissement de l'ensemble 5 faisant ressort à amortissement hydraulique et la direction radiale définie par les alvéoles 31 et 32, qui est la direction dans laquelle l'élément déformable 24 est le plus souple, sont parallèles, étant toutes deux représentées par l'axe B. On décrit maintenant, en référence à la figure 3, un deuxième mode de réalisation. Les éléments identiques à ceux de la figure 2 portent le même chiffre de référence et ne sont pas décrits à nouveau. Dans ce deuxième mode de réalisation, la direction radiale H définie par les alvéoles 31 et 32 forme un angle θ non nul, de l'ordre de 40° dans l'exemple représenté, avec la direction d'amortissement de l'ensemble 5, représentée par l'axe B. L'axe préféré de basculement D est par définition perpendiculaire à l'axe H, correspondant aux plus petites raideurs radiales.

On décrit maintenant, en référence à la figure 4, un troisième mode de réalisation de l'invention. Les éléments analogues à ceux du premier mode de réalisation portent un chiffre de référence identique et ne sont pas décrits à nouveau. A la figure 4, la demi-vue supérieure est coupée de manière analogue à la figure 1, tandis que la demi-vue inférieure est coupée selon un plan longitudinal perpendiculaire au plan de coupe de la figure 1.

L'articulation est conçue comme dans le premier mode de réalisation, aux différences près suivantes : l'armature interne 3 présente une partie de renflement convexe extérieur 42 dans sa section centrale, au milieu de l'articulation. L'armature intermédiaire 2 est conçue avec un renflement convexe parallèle 43 dans sa partie centrale, en vis à vis de la partie 42. Les renflements 42 et 43 sont de préférence sensiblement sphériques. L'élément déformable 24 présente donc, de même, une forme de révolution avec un renflement central 44 suivant les surfaces parallèles 25 et 26 et adhérisé sur elles. Il est sollicité en cisaillement entre les armatures 2 et 3 lors des déformations coniques de l'articulation.

Le fond des chambres de liquide hydraulique étant décalé radialement vers l'extérieur dans la partie centrale de l'articulation, l'armature externe présente, en vis à vis de la partie 42 de l'armature interne, une partie centrale 41 de diamètre accru afin de conserver un volume suffisant de liquide d'amortissement. L'armature externe 1 présente aussi à chaque extrémité axiale un rebord 45 replié vers l'intérieur pour retenir axialement l'élément déformable 6 dans l'armature externe.

Dans sa partie centrale, le bossage 15b comporte un canal de section rectangulaire 19 creusé dans sa surface extérieure selon une direction angulaire de l'articulation et débouchant par ses extrémités respectives dans les deux chambres 17a et 17b. La lèvre de clapet correspondante (non représentée) est séparée en deux parties disposées de part et d'autre du canal 19. Le canal 19 forme un passage de section limité pour générer une résonance de pression dans l'ensemble faisant ressort à amortissement hydraulique 5. Il permet l'écoulement de liquide d'amortissement entre les deux chambres lorsque l'articulation est sollicitée selon la direction diamétrale définie par celles-ci. La fréquence de résonance de pression est choisie en fonction des principaux modes vibratoires de la structure devant être amortis. Pour une cale de train automobile, cette fréquence de résonance est généralement comprise entre 10 et 100 Hz, par exemple d'environ 20 Hz.

L'armature intermédiaire 2 est de dimension axiale réduite, inférieure à celle de l'armature externe 1. Les alvéoles 31 présentent une section diminuant dans la direction axiale A vers le milieu de l'articulation et s'accroissant vers ses extrémités. L'élément déformable 24 est adhérisé sur toute sa longueur axiale aux armatures 2 et 3. Le rebord périphérique de l'armature 7 est supprimé.

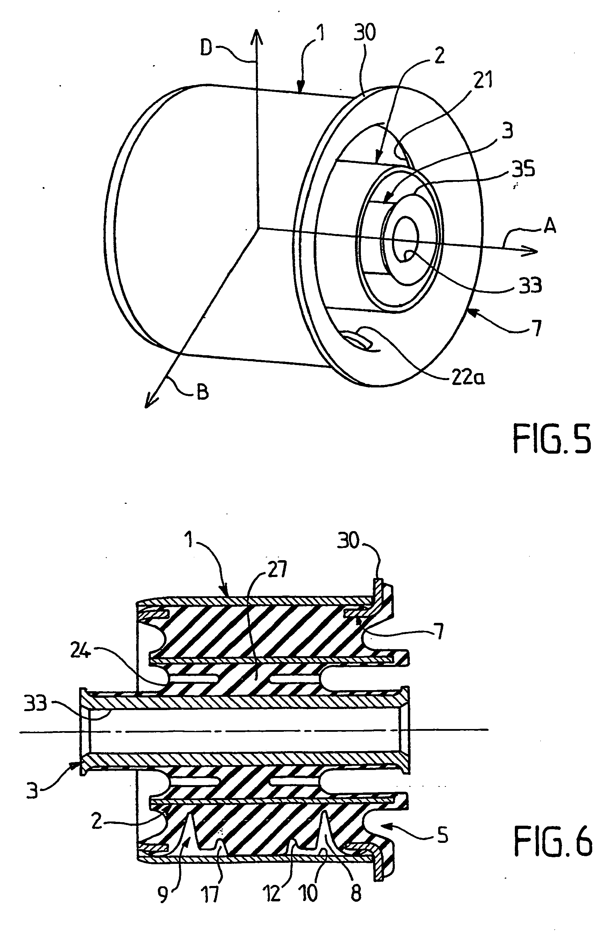

On décrit maintenant, en référence à la figure 6, un quatrième mode de réalisation de l'invention. Les éléments analogues à ceux du premier mode de réalisation portent un chiffre de référence identique et ne sont pas décrits à nouveau.

A la différence des modes de réalisation précédents, le volume étanche 9 ne comporte qu'une seule chambre 17 occupant globalement un volume semi-annulaire équivalent à celui de la chambre 17b du premier mode de réalisation. Dans ce quatrième mode de réalisation, le fluide d'amortissement 8 occupant le volume 9 n'est pas mis en circulation mais sert à accroître la raideur radiale de l'ensemble 5 sans modifier sa raideur axiale. Cette réalisation permet d'accroître le rapport entre la raideur radiale et la raideur axiale de l'articulation pour rapprocher le comportement de l'articulation de celui d'une glissière axiale. L'élément déformable 24 assure toujours la fonction d'absorption des déformations coniques et d'une partie des vibrations. En revanche, la fonction d'amortissement de l'ensemble 5 est notablement inférieure à celle obtenue dans les modes de réalisation précédents.

L'articulation du quatrième mode de réalisation présente des avantages pour le guidage d'un essieu, au détriment d'une partie du confort du véhicule. Il est toutefois possible de prévoir un moyen d'amortissement complémentaire pour améliorer l'amortissement lorsque l'articulation du quatrième mode de réalisation est utilisée pour assembler un essieu à la structure principale d'un véhicule.

Les articulations selon l'invention des modes de réalisation des figures 1 à 6 présentent l'avantage de pouvoir être réalisées de manière particulièrement simple et rapide, les éléments déformables 6 et 24 pouvant être obtenus en une seule étape de moulage à partir d'un ou plusieurs mélanges d'élastomères. On utilise pour cela un moule ayant des tiroirs à mouvements longitudinaux et des tiroirs à mouvements transversaux.

La présence d'alvéoles dans le deuxième élément déformable 24 n'est ni nécessaire, ni limitée aux modes de réalisation décrits. Un nombre et un agencement quelconque d'alvéoles peuvent être employés pour adapter les caractéristiques de raideur radiale, axiale et conique de l'élément déformable 24. La raideur de l'élément déformable 24 peut aussi être adaptée selon de nombreuses méthodes connues, par exemple, par choix du type de mélange d'élastomères et de matières de charge incluses dans ce mélange, par dimensionnement des longueurs et épaisseurs des couches d'élastomères, par formation d'alvéoles, et par précompression de l'élément déformable. Une telle précompression peut être obtenue, par exemple, par restriction d'un tube extérieur à la couche d'élastomères concernée ou par dudgeonnage de l'armature intérieure. On notera qu'on peut utiliser un même mélange ou plusieurs mélanges différents pour réaliser les deux éléments déformables 6 et 24.

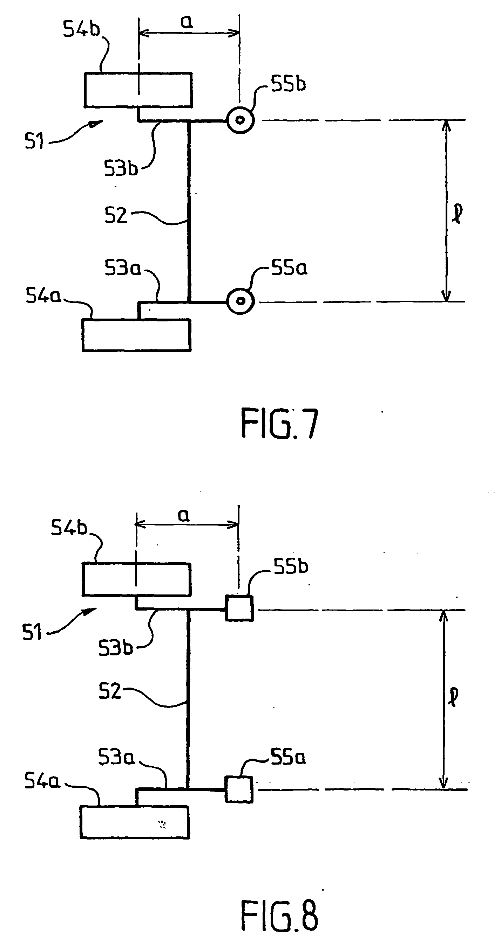

On décrit maintenant, en référence aux figures 7 à 9, un exemple d'application de l'articulation selon l'invention, en tant que cale de train d'un véhicule automobile. Cet exemple d'application concerne tous les modes de réalisation décrits.

La figure 9 a déjà été décrite. Lorsqu'on utilise les articulations décrites ci-dessus en référence aux figures 1 à 6 comme articulations 55a et 55b, la durée de vie des articulations est prolongée du fait de la fonction de rotule souple remplie par le deuxième élément élastique, qui absorbe la majeure partie des déformations coniques et soulage de manière correspondante l'ensemble faisant ressort hydroélastique. On peut ainsi orienter l'axe des articulations 55a et 55b en fonction des contraintes de fixation et d'encombrement, sans chercher à limiter sévèrement les déformations coniques subies par les articulations. Les articulations 55a et 55b ainsi choisies peuvent admettre des angles de déformation conique atteignant 25° ou plus avec une durée de vie satisfaisante.

Ainsi, en référence à la figure 9, l'angle α peut prendre toute valeur souhaitée, par exemple entre 15 et 40°. De préférence, un angle supérieur à 20° est choisi pour obtenir un effet suffisant d'autobraquage des roues arrière dans le même sens que les roues avant, de manière à combattre un comportement survireur du véhicule.

La figure 7 représente une variante de l'essieu 51 de la figure 9 dans laquelle l'axe des articulations 55a et 55b est orienté verticalement. Dans ce cas, le débattement vertical des roues se traduit entièrement par une déformation conique des articulations 55a et 55b.

La figure 8 représente une autre variante de l'essieu 51 de la figure 9 dans laquelle l'axe des articulations 55a et 55b est orienté longitudinalement. Là encore, le débattement vertical des roues se traduit par une déformation conique des articulations 55a et 55b.

Il est bien entendu que les figures 7 à 9 représentent trois orientations particulières et que toute orientation intermédiaire peut aussi être utilisée selon les besoins. Une possibilité pour assembler les articulations aux bras 53a et 53b est d'emmancher à force l'armature externe 1 dans une douille solidaire du bras correspondant. Le rebord 30 du premier mode de réalisation vient alors en butée contre cette douille lorsque la déformation axiale de l'articulation atteint une limite prescrite, par exemple 2 à 4 mm. L'armature interne 3 est fixée à la caisse du véhicule au moyen d'une vis engagée dans l'espace intérieur 33. Un montage inverse est également possible.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Ainsi, bien que les armatures soient axisymétriques dans les modes de réalisation représentés, celles-ci peuvent aussi ne pas avoir de symétrie de révolution, mais avoir une symétrie d'ordre n, n étant un nombre entier supérieur ou égal à 2, autour de leur axe ou présenter une forme allongée autour de leur axe longitudinal sans symétrie particulière.

Au repos, les armatures externe et interne ne sont pas nécessairement coaxiales. Elles peuvent avoir des axes parallèles décalés transversalement ou des axes sécants.

## Revendications (Revendications pour l'(les) Etat(s) contractant(s) suivant(s): AT, BE, BG, CH, CY, CZ, DK, EE, FI, GR, IE, IT, LI, LU, MC, NL, PT, SK, TR)

1. Articulation pour assembler deux pièces d'une structure et amortir des vibrations transmises entre l'une et l'autre, ladite articulation convenant pour l'assemblage d'un organe de liaison au sol d'un véhicule à une structure principale dudit véhicule, ladite articulation comportant une armature externe (1) et une armature interne (3) ayant chacune un axe longitudinal, disposées l'une autour de l'autre et destinées à être fixées respectivement à l'une et à l'autre desdites pièces à assembler, et un premier élément élastiquement déformable (6) disposé entre lesdites armatures de manière à permettre un déplacement transversal relatif entre lesdites armatures, un deuxième élément élastiquement déformable (24) étant disposé entre ledit premier élément élastiquement déformable (6) et ladite armature interne, ladite articulation comportant une armature intermédiaire (2) disposée entre lesdits premier (6) et deuxième (24) éléments élastiquement déformables, lesdits premier et deuxième éléments élastiquement déformables étant adhérisés sur ladite armature intermédiaire (2), ledit deuxième élément élastiquement déformable étant adhérisé sur ladite armature interne, **caractérisée par le fait que** ladite articulation est une articulation hydroélastique dans laquelle ledit premier élément élastiquement déformable (6) est conformé de manière à délimiter au moins un volume étanche (9) contenant un liquide d'amortissement (8) entre ladite armature externe et ladite armature intermédiaire, et forme un ensemble (5) faisant ressort hydroélastique disposé entre ladite armature externe et ladite armature intermédiaire, ledit deuxième élément élastiquement déformable (24) présentant une dimension longitudinale inférieure à une dimension longitudinale correspondante du premier élément élastiquement déformable (6), de manière à limiter une déformation transversale dudit premier élément élastiquement déformable (6) lors d'un basculement relatif des axes longitudinaux desdites armatures autour d'au moins un axe transversal de basculement (D).

2. Articulation hydroélastique selon la revendication 1, **caractérisé par le fait que** ladite armature interne et ladite armature intermédiaire comportent chacune une portion centrale cylindrique.

3. Articulation hydroélastique selon la revendication 1, **caractérisée par le fait que** ladite armature interne (3) et l'armature intermédiaire (2) présentent chacune un renflement périphérique respectif (42, 43) au niveau de surfaces (26, 25) en contact avec ledit deuxième élément élastiquement déformable (24) de manière à solliciter ledit deuxième élément élastiquement déformable en cisaillement entre lesdits renflements périphériques lors dudit basculement relatif des axes des armatures externe et interne, le deuxième élément élastiquement déformable (24) étant aussi adhérisé sur ladite armature interne.

4. Articulation hydroélastique selon la revendication 1, **caractérisée par le fait que** le premier élément élastiquement déformable (6) présente deux parois d'extrémité (13, 14) de manière à définir ledit volume étanche (9) entre lesdites parois d'extrémité, ledit premier élément élastiquement déformable étant muni d'une armature périphérique de rigidification (7, 20, 21) au moins au niveau desdites parois d'extrémité (13, 14) pour recevoir une armature (1) par emmanchement sans adhérisation, de manière à assurer une étanchéité dudit volume de liquide d'amortissement.

5. Articulation hydroélastique selon l'une des revendications 1 à 4, **caractérisée par le fait que** lesdites parois d'extrémité (13, 14) relient de manière étanche l'armature intermédiaire (2) et ladite armature externe de manière à définir ledit volume étanche (9) entre l'armature intermédiaire (2) et ladite armature externe (1), ledit premier élément élastiquement déformable recevant par emmanchement sans adhérisation l'armature externe (1).

6. Articulation hydroélastique selon l'une des revendications 1 à 5, **caractérisée par le fait que** ledit volume étanche (9) est divisé en au moins deux chambres (17a, 17b) opposées selon une première direction transversale (B) définissant une direction d'amortissement hydraulique dudit ensemble (5) formant ressort hydroélastique, ledit ensemble comportant un moyen (16a, 16b, 19) pour mettre en communication lesdites chambres, de manière à engendrer un amortissement hydraulique desdites vibrations transmises entre lesdites armatures au moins selon ladite première direction transversale (B).

7. Articulation hydroélastique selon la revendication 6 prise en combinaison avec la revendication 5, **caractérisée par le fait que** le premier élément élastiquement déformable (6) présente deux bossages longitudinaux (15a, 15b) reliant lesdites parois d'extrémité (13, 14) de manière à séparer lesdites deux chambres (17a, 17b), lesdits moyens pour mettre en communication les deux chambres comportant au moins une lèvre de clapet (16a, 16b) fixée à au moins l'un desdits bossages longitudinaux de manière à venir en contact avec ladite armature externe (1), ladite lèvre de clapet étant apte à se replier de manière à mettre lesdites chambres en communication lorsqu'une différence de pression entre lesdites chambres dépasse une valeur de seuil.

8. Articulation hydroélastique selon la revendication 6 prise en combinaison avec la revendication 5 ou selon la revendication 7, **caractérisée par le fait que** le premier élément élastiquement déformable présente deux butées (18a, 18b) en saillie sensiblement au centre de chaque chambre (17a, 17b) pour limiter un débattement entre l'armature externe (1) et l'armature intermédiaire (2) selon ladite première direction transversale (B).

9. Articulation hydroélastique selon la revendication 8, **caractérisée par le fait que** lesdites butées (18a, 18b) sont précontraintes en compression transversale entre l'armature intermédiaire et l'armature externe.

10. Articulation hydroélastique selon l'une des revendications 1 à 9, **caractérisée par le fait que** ledit deuxième élément élastiquement déformable (24) présente une raideur plus faible dans au moins une seconde direction transversale (H) de manière à définir, perpendiculairement à ladite seconde direction transversale, un axe transversal de basculement préférentiel (D) pour ledit basculement relatif des axes des armatures externe et interne.

11. Articulation hydroélastique selon la revendication 6 prise en combinaison avec la revendication 10, **caractérisée par le fait que** ladite première direction transversale (B) et ladite seconde direction transversale (H) sont parallèles.

12. Articulation hydroélastique selon la revendication 6 prise en combinaison avec la revendication 10, **caractérisée par le fait que** ladite première direction transversale (B) et ladite seconde direction transversale (H) forment un angle (θ).

13. Articulation hydroélastique selon l'une des revendications 10 à 12, **caractérisée par le fait que** ledit deuxième élément élastiquement déformable (24) présente au moins deux alvéoles (31, 32) sensiblement longitudinales et opposées dans ladite seconde direction transversale (H).

14. Articulation hydroélastique selon l'une des revendications 1 à 13, **caractérisée par le fait que** lesdits premier (6) et deuxième (24) éléments élastiquement déformables sont obtenus en une seule étape de moulage.

15. Articulation hydroélastique selon l'une des revendications 1 à 14, **caractérisée par le fait que** ladite armature interne (3) est de forme globalement tubulaire et présente une section de paroi épaissie et/ou élargie au niveau d'au moins l'une de ses extrémités longitudinales (34, 35) pour offrir une surface de contact accrue avec la pièce à laquelle ladite armature interne doit être fixée ou avec un moyen pour fixer ladite armature interne à ladite pièce.

16. Articulation hydroélastique selon l'une des revendications 1 à 15, **caractérisée par le fait qu'**elle présente au moins une partie externe (30) apte à s'appuyer sur l'une desdites pièces à assembler pour empêcher une déformation de l'articulation au-delà d'une amplitude limite prescrite.

17. Essieu pour véhicule automobile comportant une poutrelle (52) portant symétriquement à chacune de ses extrémités un support de roue respectif, ladite poutrelle étant munie symétriquement de deux articulations (55a, 55b) pour assembler ladite poutrelle à une structure principale d'un véhicule automobile et amortir des vibrations, **caractérisé par le fait que** lesdites articulations sont des articulations hydroélastiques selon l'une des revendications 1 à 16.

18. Essieu selon la revendication 17, **caractérisé par le fait que** lesdites articulations sont fixées à ladite poutrelle de manière qu'un axe respectif de chacune desdites articulations forme un angle (α) supérieur à 20° avec une direction (Y) définie par les deux supports de roue.

## Revendications (Revendications pour l'(les) Etat(s) contractant(s) suivant(s): DE, FR, GB, ES, SE)

1. Articulation pour assembler deux pièces d'une structure et amortir des vibrations transmises entre l'une et l'autre, ladite articulation convenant pour l'assemblage d'un organe de liaison au sol d'un véhicule à une structure principale dudit véhicule, ladite articulation comportant une armature externe (1) et une armature interne (3) ayant chacune un axe longitudinal, disposées l'une autour de l'autre et destinées à être fixées respectivement à l'une et à l'autre desdites pièces à assembler, et un premier élément élastiquement déformable (6) disposé entre lesdites armatures de manière à permettre un déplacement transversal relatif entre lesdites armatures, un deuxième élément élastiquement déformable (24) étant disposé entre ledit premier élément élastiquement déformable (6) et ladite armature interne, ladite articulation comportant une armature intermédiaire (2) disposée entre lesdits premier (6) et deuxième (24) éléments élastiquement déformables, lesdits premier et deuxième éléments élastiquement déformables étant adhérisés sur ladite armature intermédiaire (2), ledit deuxième élément élastiquement déformable étant adhérisé sur ladite armature interne, **caractérisée par le fait que** ladite articulation est une articulation hydroélastique dans laquelle ledit premier élément élastiquement déformable (6) est conformé de manière à délimiter au moins un volume étanche (9) contenant un liquide d'amortissement (8) entre ladite armature externe et ladite armature intermédiaire, et forme un ensemble (5) faisant ressort hydroélastique disposé entre ladite armature externe et ladite armature intermédiaire, ledit deuxième élément élastiquement déformable (24) présentant une dimension longitudinale inférieure à une dimension longitudinale correspondante du premier élément élastiquement déformable (6), de manière à limiter une déformation transversale dudit premier élément élastiquement déformable (6) lors d'un basculement relatif des axes longitudinaux desdites armatures autour d'au moins un axe transversal de basculement (D), ladite armature interne et ladite armature intermédiaire comportant chacune une portion centrale cylindrique.

2. Articulation hydroélastique selon la revendication 1, **caractérisée par le fait que** le premier élément élastiquement déformable (6) présente deux parois d'extrémité (13, 14) de manière à définir ledit volume étanche (9) entre lesdites parois d'extrémité, ledit premier élément élastiquement déformable étant muni d'une armature périphérique de rigidification (7, 20, 21) au moins au niveau desdites parois d'extrémité (13, 14) pour recevoir une armature (1) par emmanchement sans adhérisation, de manière à assurer une étanchéité dudit volume de liquide d'amortissement.

3. Articulation hydroélastique selon l'une des revendications 1 à 2, **caractérisée par le fait que** lesdites parois d'extrémité (13, 14) relient de manière étanche l'armature intermédiaire (2) et ladite armature externe de manière à définir ledit volume étanche (9) entre l'armature intermédiaire (2) et ladite armature externe (1), ledit premier élément élastiquement déformable recevant par emmanchement sans adhérisation l'armature externe (1).

4. Articulation hydroélastique selon l'une des revendications 1 à 3, **caractérisée par le fait que** ledit volume étanche (9) est divisé en au moins deux chambres (17a, 17b) opposées selon une première direction transversale (B) définissant une direction d'amortissement hydraulique dudit ensemble (5) formant ressort hydroélastique, ledit ensemble comportant un moyen (16a, 16b, 19) pour mettre en communication lesdites chambres, de manière à engendrer un amortissement hydraulique desdites vibrations transmises entre lesdites armatures au moins selon ladite première direction transversale (B).

5. Articulation hydroélastique selon la revendication 4 prise en combinaison avec la revendication 3, **caractérisée par le fait que** le premier élément élastiquement déformable (6) présente deux bossages longitudinaux (15a, 15b) reliant lesdites parois d'extrémité (13, 14) de manière à séparer lesdites deux chambres (17a, 17b), lesdits moyens pour mettre en communication les deux chambres comportant au moins une lèvre de clapet (16a, 16b) fixée à au moins l'un desdits bossages longitudinaux de manière à venir en contact avec ladite armature externe (1), ladite lèvre de clapet étant apte à se replier de manière à mettre lesdites chambres en communication lorsqu'une différence de pression entre lesdites chambres dépasse une valeur de seuil.

6. Articulation hydroélastique selon la revendication 4 prise en combinaison avec la revendication 3 ou selon la revendication 5, **caractérisée par le fait que** le premier élément élastiquement déformable présente deux butées (18a, 18b) en saillie sensiblement au centre de chaque chambre (17a, 17b) pour limiter un débattement entre l'armature externe (1) et l'armature intermédiaire (2) selon ladite première direction transversale (B).

7. Articulation hydroélastique selon la revendication 6, **caractérisée par le fait que** lesdites butées (18a, 18b) sont précontraintes en compression transversale entre l'armature intermédiaire et l'armature externe.

8. Articulation hydroélastique selon l'une des revendications 1 à 7, **caractérisée par le fait que** ledit deuxième élément élastiquement déformable (24) présente une raideur plus faible dans au moins une seconde direction transversale (H) de manière à définir, perpendiculairement à ladite seconde direction transversale, un axe transversal de basculement préférentiel (D) pour ledit basculement relatif des axes des armatures externe et interne.

9. Articulation hydroélastique selon la revendication 4 prise en combinaison avec la revendication 8, **caractérisée par le fait que** ladite première direction transversale (B) et ladite seconde direction transversale (H) sont parallèles.

10. Articulation hydroélastique selon la revendication 4 prise en combinaison avec la revendication 8, **caractérisée par le fait que** ladite première direction transversale (B) et ladite seconde direction transversale (H) forment un angle (θ).

11. Articulation hydroélastique selon l'une des revendications 8 à 10, **caractérisée par le fait que** ledit deuxième élément élastiquement déformable (24) présente au moins deux alvéoles (31, 32) sensiblement longitudinales et opposées dans ladite seconde direction transversale (H).

12. Articulation hydroélastique selon l'une des revendications 1 à 11, **caractérisée par le fait que** lesdits premier (6) et deuxième (24) éléments élastiquement déformables sont obtenus en une seule étape de moulage.

13. Articulation hydroélastique selon l'une des revendications 1 à 12, **caractérisée par le fait que** ladite armature interne (3) est de forme globalement tubulaire et présente une section de paroi épaissie et/ou élargie au niveau d'au moins l'une de ses extrémités longitudinales (34, 35) pour offrir une surface de contact accrue avec la pièce à laquelle ladite armature interne doit être fixée ou avec un moyen pour fixer ladite armature interne à ladite pièce.

14. Articulation hydroélastique selon l'une des revendications 1 à 13, **caractérisée par le fait qu'**elle présente au moins une partie externe (30) apte à s'appuyer sur l'une desdites pièces à assembler pour empêcher une déformation de l'articulation au-delà d'une amplitude limite prescrite.

15. Essieu pour véhicule automobile comportant une poutrelle (52) portant symétriquement à chacune de ses extrémités un support de roue respectif, ladite poutrelle étant munie symétriquement de deux articulations (55a, 55b) pour assembler ladite poutrelle à une structure principale d'un véhicule automobile et amortir des vibrations, **caractérisé par le fait que** lesdites articulations sont des articulations hydroélastiques selon l'une des revendications 1 à 14.

16. Essieu selon la revendication 15, **caractérisé par le fait que** lesdites articulations sont fixées à ladite poutrelle de manière qu'un axe respectif de chacune desdites articulations forme un angle (α) supérieur à 20° avec une direction (Y) définie par les deux supports de roue.

## Claims (Claims for the following Contracting State(s): AT, BE, BG, CH, CY, CZ, DK, EE, FI, GR, IE, IT, LI, LU, MC, NL, PT, SK, TR)

1. Joint for assembling two parts of a structure and damping the vibrations transmitted between one and the other, the said joint being suitable for the assembly of a ground contact aggregate of a vehicle to a main structure of the vehicle, the said joint comprising an outer armature (1) and an inner armature (3) each having a longitudinal axis, being arranged one around the other and being designed to be fixed respectively to one and to the other of the said parts to be assembled, and a first elastically deformable element (6) arranged between the said armatures so as to enable a relative transverse displacement between the armatures, a second elastically deformable element (24) being arranged between the said elastically deformable element (6) and the said inner armature, the said joint comprising an intermediate armature (2) arranged between the said first (6) and the said second (24) elastically deformable elements, the said first and second elastically deformable elements being adhesively bonded to the said intermediate armature (2), the said second elastically deformable element being adhesively bonded to the said inner armature, **characterised in that** the said joint is a hydroelastic joint in which the said first elastically deformable element (6) is shaped so as to delimit at least one leakproof volume (9) that contains a damping liquid (8) between the said outer armature and the said intermediate armature, the longitudinal dimension of the said second elastically deformable element (24) being smaller than a corresponding longitudinal dimension of the first elastically deformable element (6), so as to limit a transverse deformation of the said first elastically deformable element (6) during a relative tilt of the longitudinal axes of the said armatures about at least one transverse tilt axis (D).

2. Hydroelastic joint according to Claim 1, **characterised in that** the said inner armature and the said intermediate armature each have a cylindrical central portion.

3. Hydroelastic joint according to Claim 1, **characterised in that** the said inner armature (3) and the intermediate armature (2) each have a respective peripheral bulge (42, 43) at the level of the surfaces (26, 25) in contact with the said second elastically deformable element (24) so that the said second elastically deformable element is acted upon by shear between the said peripheral bulges during the said relative tilting of the axes of the outer and inner armatures, the said second elastically deformable element (24) also being adhesively bonded to the said inner armature.

4. Hydroelastic joint according to Claim 1, **characterised in that** the first elastically deformable element (6) has two end walls (13, 14) such that the said leakproof volume (9) is delimited between the said end walls, the said first elastically deformable element being provided with a peripheral rigidising reinforcement (7, 20, 21) at least at the level of the said end walls (13, 14) in order to receive an armature (1) by slide fitting without adhesive bonding, in such manner as to ensure that the said volume containing the damping liquid is leakproof.

5. Hydroelastic joint according to any of Claims 1 to 4, **characterised in that** the said end walls (13, 14) connect the intermediate armature (2) and the said outer armature (1) in a leakproof manner so as to define the said leakproof volume (9) between the intermediate armature (2) and the said outer armature (1), the said first elastically deformable element receiving the outer armature (1) by slide fitting without adhesive bonding.

6. Hydroelastic joint according to any of Claims 1 to 4, **characterised in that** the leakproof volume (9) is divided into at least two chambers (17a, 17b) opposite one another along a first transverse direction (B) which defines a hydraulic damping direction of the said assembly (5) forming a hydroelastic spring, the said assembly comprising means (16a, 16b, 19) for bringing the said chambers into communication so as to cause hydraulic damping of the said vibrations transmitted between the said armatures at least along the said first transverse direction (B).

7. Hydroelastic joint according to Claim 6 taken in combination with Claim 5, **characterised in that** the first elastically deformable element (6) has two longitudinal humps (15a, 15b) connecting the said end walls (13, 14) so as to separate the said two chambers (17a, 17b), the said means for bringing the two chambers into communication comprising at least one valve flap (16a, 16b) fixed on at least one of the said longitudinal humps so as to come into contact with the said outer armature (1), the said valve flap being able to bend so as to bring the said chambers into communication when a pres difference between the said chambers exceeds a threshold value.

8. Hydroelastic joint according to Claim 6 taken in combination with Claim 5 or according to Claim 7, **characterised in that** the first elastically deformable element has two projecting abutments (18a, 18b) essentially in the middle of each chamber (17a, 17b) to limit a deflection between the outer armature (1) and the 9ntermediate armature (2) along the said first transverse direction (B).

9. Hydroelastic joint according to Claim 8, **characterised in that** the said abutments (18a, 18b) are pre-stressed in transverse compression between the intermediate armature and the outer armature.

10. Hydroelastic joint according to according to any of Claims 1 to 9, **characterised in that** the said second elastically deformable element (24) has lower rigidity in at least one second transverse direction (H) so as to define, perpendicularly to the second transverse direction, a preferred transverse tilt axis (D) for the said relative tilting of the axes of the outer armature and the inner armature.

11. Hydroelastic joint according to Claim 6 taken in combination with Claim 10, **characterised in that** the said first transverse direction (B) and the said second Transverse direction (H) are parallel.

12. Hydroelastic joint according to Claim 6 taken in combination with Claim 10, **characterised in that** the said first transverse direction (B) and the said second Transverse direction (H) form an angle (θ).

13. Hydroelastic joint according to any of Claims 10 to 12, **characterised in that** the said second elastically deformable element (24) has at least two cavities (31, 32) which are essentially longitudinal and opposite one another in the said second transverse direction (H).

14. Hydroelastic joint according to any of Claims 1 to 13, **characterised in that** the said first (6) and second (24) elastically deformable elements are obtained in a single moulding operation.

15. Hydroelastic joint according to any of Claims 1 to 14, **characterised in that** the overall shape of the said inner armature (3) is tubular, with a wall section that is thick and/or expanded at the level of at least one of its longitudinal ends (34, 35) so as to provide a larger contact area with the component to which the said inner armature has to be fixed, or with means for fixing the said inner armature to the said component.

16. Hydroelastic joint according to any of Claims 1 to 15, **characterised in that** it has at least one outer portion (30) that can rest in contact with one of the said parts to be assembled in order to prevent deformation of the joint beyond a prescribed amplitude limit.

17. Automobile vehicle axle comprising a shaft (52) carrying symmetrically at each end a respective wheel support, the said shaft being provided symmetrically with two joints (55a, 55b) for assembling the shaft to a main structure of an automobile vehicle and for damping vibrations, **characterised in that** the dais joints are hydroelastic joints according to any of Claims 1 to 16.

18. Axle according to Claim 17, **characterised in that** the said joints are fixed on the said shaft so that a respective axis of each of the joints forms an angle (α) larger than 20° relative to a direction (Y) defined by the two wheel supports.

## Claims (Claims for the following Contracting State(s): DE, FR, GB, ES, SE)

1. Joint for assembling two parts of a structure and damping the vibrations transmitted between one and the other, the said joint being suitable for the assembly of a ground contact aggregate of a vehicle to a main structure of the vehicle, the said joint comprising an outer armature (1) and an inner armature (3) each having a longitudinal axis, being arranged one around the other and being designed to be fixed respectively to one and to the other of the said parts to be assembled, and a first elastically deformable element (6) arranged between the said armatures so as to enable a relative transverse displacement between the armatures, a second elastically deformable element (24) being arranged between the said elastically deformable element (6) and the said inner armature, the said joint comprising an intermediate armature (2) arranged between the said first (6) and the said second (24) elastically deformable elements, the said first and second elastically deformable elements being adhesively bonded to the said intermediate armature (2), the said second elastically deformable element being adhesively bonded to the said inner armature, **characterised in that** the said joint is a hydroelastic joint in which the said first elastically deformable element (6) is shaped so as to delimit at least one leakproof volume (9) that contains a damping liquid (8) between the said outer armature and the said intermediate armature, the longitudinal dimension of the said second elastically deformable element (24) being smaller than a corresponding longitudinal dimension of the first elastically deformable element (6), so as to limit a transverse deformation of the said first elastically deformable element (6) during a relative tilt of the longitudinal axes of the said armatures about at least one transverse tilt axis (D), the said inner armature and the said intermediate armature each comprising a cylindrical central portion.

2. Hydroelastic joint according to Claim 1, **characterised in that** the first elastically deformable element (6) has two end walls (13, 14) such that the said leakproof volume (9) is delimited between the said end walls, the said first elastically deformable element being provided with a peripheral rigidising reinforcement (7, 20, 21) at least at the level of the said end walls (13, 14) in order to receive an armature (1) by slide fitting without adhesive bonding, in such manner as to ensure that the said volume containing the damping liquid is leakproof.

3. Hydroelastic joint according to either of Claims 1 or 2, **characterised in that** the said end walls (13, 14) connect the intermediate armature (2) and the said outer armature (1) in a leakproof manner so as to define the said leakproof volume (9) between the intermediate armature (2) and the said outer armature (1), the said first elastically deformable element receiving the outer armature (1) by slide fitting without adhesive bonding.

4. Hydroelastic joint according to any of Claims 1 to 3, **characterised in that** the leakproof volume (9) is divided into at least two chambers (17a, 17b) opposite one another along a first transverse direction (B) which defines a hydraulic damping direction of the said assembly (5) forming a hydroelastic spring, the said assembly comprising means (16a, 16b, 19) for bringing the said chambers into communication so as to cause hydraulic damping of the said vibrations transmitted between the said armatures at least along the said first transverse direction (B).

5. Hydroelastic joint according to Claim 4 taken in combination with Claim 3, **characterised in that** the first elastically deformable element (6) has two longitudinal humps (15a, 15b) connecting the said end walls (13, 14) so as to separate the said two chambers (17a, 17b), the said means for bringing the two chambers into communication comprising at least one valve flap (16a, 16b) fixed on at least one of the said longitudinal humps so as to come into contact with the said outer armature (1), the said valve flap being able to bend so as to bring the said chambers into communication when a pres difference between the said chambers exceeds a threshold value.

6. Hydroelastic joint according to Claim 4 taken in combination with Claim 3 or according to Claim 5, **characterised in that** the first elastically deformable element has two projecting abutments (18a, 18b) essentially in the middle of each chamber (17a, 17b) to limit a deflection between the outer armature (1) and the 9ntermediate armature (2) along the said first transverse direction (B).

7. Hydroelastic joint according to Claim 6, **characterised in that** the said abutments (18a, 18b) are pre-stressed in transverse compression between the intermediate armature and the outer armature.

8. Hydroelastic joint according to according to any of Claims 1 to 7, **characterised in that** the said second elastically deformable element (24) has lower rigidity in at least one second transverse direction (H) so as to define, perpendicularly to the second transverse direction, a preferred transverse tilt axis (D) for the said relative tilting of the axes of the outer armature and the inner armature.

9. Hydroelastic joint according to Claim 4 taken in combination with Claim 8, **characterised in that** the said first transverse direction (B) and the said second Transverse direction (H) are parallel.

10. Hydroelastic joint according to Claim 4 taken in combination with Claim 8, **characterised in that** the said first transverse direction (B) and the said second Transverse direction (H) form an angle (θ).

11. Hydroelastic joint according to any of Claims 8 to 10, **characterised in that** the said second elastically deformable element (24) has at least two cavities (31, 32) which are essentially longitudinal and opposite one another in the said second transverse direction (H).

12. Hydroelastic joint according to any of Claims 1 to 11, **characterised in that** the said first (6) and second (24) elastically deformable elements are obtained in a single moulding operation.

13. Hydroelastic joint according to any of Claims 1 to 12, **characterised in that** the overall shape of the said inner armature (3) is tubular, with a wall section that is thick and/or expanded at the level of at least one of its longitudinal ends (34, 35) so as to provide a larger contact area with the component to which the said inner armature has to be fixed, or with means for fixing the said inner armature to the said component.

14. Hydroelastic joint according to any of Claims 1 to 13, **characterised in that** it has at least one outer portion (30) that can rest in contact with one of the said parts to be assembled in order to prevent deformation of the joint beyond a prescribed amplitude limit.

15. Automobile vehicle axle comprising a shaft (52) carrying symmetrically at each end a respective wheel support, the said shaft being provided symmetrically with two joints (55a, 55b) for assembling the shaft to a main structure of an automobile vehicle and for damping vibrations, **characterised in that** the dais joints are hydroelastic joints according to any of Claims 1 to 14.

16. Axle according to Claim 15, **characterised in that** the said joints are fixed on the said shaft so that a respective axis of each of the joints forms an angle (α) larger than 20° relative to a direction (Y) defined by the two wheel supports.

## Patentansprüche (Patentansprüche für folgende(n) Vertragsstaat(en): AT, BE, BG, CH, CY, CZ, DK, EE, FI, GR, IE, IT, LI, LU, MC, NL, PT, SK, TR)

1. Gelenk zum Verbinden von zwei Teilen eines Aufbaus und zum Dämpfen der zwischen ihnen übertragenen Schwingungen, wobei das Gelenk ein Organ zum Verbinden mit dem Boden eines Fahrzeugs mit einem Hauptaufbau des Fahrzeugs verbinden kann, wobei das Gelenk einen äußeren Beschlag (1) und einen inneren Beschlag (3) mit jeweils einer Längsachse aufweist, die umeinander herum angeordnet sind und an dem einen beziehungsweise dem anderen der zu verbindenden Teile befestigt werden, sowie ein erstes elastisch verformbares Element (6), das derart zwischen den Beschlägen angeordnet ist, dass es eine relative Querbewegung zwischen ihnen erlaubt, wobei ein zweites elastisch verformbares Element (24) zwischen dem ersten elastisch verformbaren Element (6) und dem inneren Beschlag angeordnet ist, wobei das Gelenk einen mittleren Beschlag (2) aufweist, der zwischen dem ersten (6) und dem zweiten elastisch verformbaren Element (24) angeordnet ist, wobei das erste und das zweite elastisch verformbare Element am mittleren Beschlag (2) haftend gemacht sind, wobei das zweite elastisch verformbare Element am inneren Beschlag haftend gemacht ist, **dadurch gekennzeichnet, dass** das Gelenk ein hydroelastisches Gelenk ist, in dem das erste elastisch verformbare Element (6) so ausgebildet ist, dass es mindestens einen dichten Raum (9) zwischen dem äußeren Beschlag und dem mittleren Beschlag festlegt, der eine Dämpfflüssigkeit (8) enthält, und eine Einheit (5) bildet, die wie eine hydroelastische Feder zwischen dem äußeren Beschlag und dem mittleren Beschlag wirkt, wobei das zweite elastisch verformbare Element (24) eine kleinere Längsabmessung als eine entsprechende Längsabmessung des ersten elastisch verformbaren Elements (6) aufweist, sodass eine Querverformung des ersten elastisch verformbaren Elements (6) bei einem relativen Kippen der Längsachsen der Beschläge um mindestens eine quer verlaufende Kippachse (D) begrenzt wird.

2. Hydroelastisches Gelenk nach Anspruch 1, **dadurch gekennzeichnet, dass** der innere Beschlag und der mittlere Beschlag jeweils einen zylindrischen zentralen Abschnitt aufweisen.

3. Hydroelastisches Gelenk nach Anspruch 1, **dadurch gekennzeichnet, dass** der innere Beschlag (3) und der mittlere Beschlag (2) jeweils eine peripherische Verdickung (42, 43) auf der Höhe von Flächen (26, 24) in Kontakt mit dem zweiten elastisch verformbaren Element (24) aufweisen, sodass das zweite elastisch verformbare Element beim relativen Kippen der Achsen des äußeren und inneren Beschlags in Scherspannung zwischen den peripherischen Verdickungen beansprucht ist, wobei das zweite elastisch verformbare Element (24) auch am inneren Beschlag haftend gemacht ist.

4. Hydroelastisches Gelenk nach Anspruch 1, **dadurch gekennzeichnet, dass** das erste elastisch verformbare Element (6) zwei Endwände (13, 14) aufweist, zwischen denen der dichte Raum (9) festgelegt ist, wobei das erste elastisch verformbare Element zumindest auf der Höhe der Endwände (13, 14) mit einem peripherischen Versteifungsbeschlag (7, 20, 21) versehen ist, um einen Beschlag (1) durch Einstecken ohne Haftendmachung so aufzunehmen, dass für die Dichtheit des Raums der Dämpfflüssigkeit gesorgt ist.

5. Hydroelastisches Gelenk nach einem der Ansprüche 1 bis 4, **dadurch gekennzeichnet, dass** die Endwände (13, 14) den mittleren Beschlag (2) und den äußeren Beschlag in dichter Weise verbinden, sodass der dichte Raum (9) zwischen dem mittleren Beschlag (2) und dem äußeren Beschlag (1) festgelegt ist, wobei das erste elastisch verformbare Element den äußeren Beschlag (1) durch Einstecken ohne Haftendmachung aufnimmt.

6. Hydroelastisches Gelenk nach einem der Ansprüche 1 bis 5, **dadurch gekennzeichnet, dass** der dichte Raum (9) in mindestens zwei Kammern (17a, 17b) unterteilt ist, die einander in einer ersten Querrichtung (B) gegenüberliegen, welche eine Richtung der hydraulischen Dämpfung der als hydreoelastische Feder wirkenden Einheit (5) festlegt, wobei die Einheit ein Mittel (16a, 16b, 19) aufweist, das die Kammern miteinander verbindet, sodass die zwischen den Beschlägen übertragenen Schwingungen zumindest in der ersten Querrichtung (B) hydraulisch gedämpft werden.

7. Hydroelastisches Gelenk nach Anspruch 6 in Kombination mit Anspruch 5, **dadurch gekennzeichnet, dass** das erste elastisch verformbare Element (6) zwei Längsbuckel (15a, 15b) aufweist, welche die beiden Endwände (13, 14) derart verbinden, dass die beiden Kammern (17a, 17b) voneinander getrennt werden, wobei die Mittel zum Verbinden der beiden Kammern mindestens eine Ventillippe (16a, 16b) umfassen, die an mindestens einem der Längsbuckel derart befestigt ist, dass sie in Kontakt mit dem äußeren Beschlag (1) kommt, wobei die Ventillippe sich derart umbiegen kann, dass die Kammern verbunden werden, wenn ein Druckunterschied zwischen den Kammern einen Grenzwert überschreitet.

8. Hydroelastisches Gelenk nach Anspruch 6 in Kombination mit Anspruch 5 oder nach Anspruch 7, **dadurch gekennzeichnet, dass** das erste elastisch verformbare Element zwei Anschläge (18a, 18b) aufweist, die im Wesentlichen in der Mitte jeder Kammer (17a, 17b) vorspringen, um eine Bewegung zwischen dem äußeren Beschlag (1) und dem mittleren Beschlag (2) in der ersten Querrichtung (B) zu begrenzen.

9. Hydroelastisches Gelenk nach Anspruch 8, **dadurch gekennzeichnet, dass** die Anschläge (18a, 18b) in Querrichtung zwischen dem mittleren Beschlag und dem äußeren Beschlag vorkomprimiert sind.

10. Hydroelastisches Gelenk nach einem der Ansprüche 1 bis 9, **dadurch gekennzeichnet, dass** das zweite elastisch verformbare Element (24) zumindest in einer zweiten Querrichtung (H) eine geringere Steifheit aufweist, sodass senkrecht zur zweiten Querrichtung eine bevorzugte quer verlaufende Kippachse (D) für das relative Kippen der Achsen des äußeren und inneren Beschlags festgelegt wird.

11. Hydroelastisches Gelenk nach Anspruch 6 in Kombination mit Anspruch 10, **dadurch gekennzeichnet, dass** die erste Querrichtung (B) und die zweite Querrichtung (H) parallel sind.

12. Hydroelastisches Gelenk nach Anspruch 6 in Kombination mit Anspruch 10, **dadurch gekennzeichnet, dass** die erste Querrichtung (B) und die zweite Querrichtung (H) einen Winkel (θ) bilden.

13. Hydroelastisches Gelenk nach einem der Ansprüche 10 bis 12, **dadurch gekennzeichnet, dass** das zweite elastisch verformbare Element (24) mindestens zwei Aushöhlungen (31, 32) aufweist, die im Wesentlichen längs verlaufen und einander in der zweiten Querrichtung (H) gegenüberliegen.

14. Hydroelastisches Gelenk nach einem der Ansprüche 1 bis 13, **dadurch gekennzeichnet, dass** das erste (6) und das zweite elastisch verformbare Element (24) in einem einzigen Gießschritt erhalten werden.

15. Hydroelastisches Gelenk nach einem der Ansprüche 1 bis 14, **dadurch gekennzeichnet, dass** der innere Beschlag (3) im Wesentlichen rohrförmig ist und einen verdickten und/ oder erweiterten Wandabschnitt auf der Höhe von mindestens einem seiner Längsenden (34, 35) aufweist, um eine Fläche vermehrten Kontakts mit dem Teil, an dem der innere Beschlag befestigt werden muss, oder mit einem Mittel zum Befestigen des inneren Beschlags an diesem Teil zu bieten.

16. Hydroelastisches Gelenk nach einem der Ansprüche 1 bis 15, **dadurch gekennzeichnet, dass** es mindestens einen äußeren Abschnitt (30) aufweist, der sich auf eines der zu verbindenden Teile stützen kann, um eine Verformung des Gelenks über einen festgelegten Grenzausschlag hinaus zu verhindern.

17. Kraftfahrzeugachse mit einem Balken (52), der symmetrisch an jedem seiner Enden einen Radträger trägt, wobei der Balken symmetrisch mit zwei Gelenken (55a, 55b) versehen ist, um ihn mit einem Hauptaufbau eines Kraftfahrzeugs zu verbinden und Schwingungen zu dämpfen, **dadurch gekennzeichnet, dass** die Gelenke hydroelastische Gelenke nach einem der Ansprüche 1 bis 16 sind.

18. Achse nach Anspruch 17, **dadurch gekennzeichnet, dass** die Gelenke derart an dem Balken befestigt sind, dass eine Achse jedes der Gelenke einen Winkel (α) größer 20° mit einer Richtung (Y) bildet, die von den beiden Radträgern festgelegt ist.

## Patentansprüche (Patentansprüche für folgende(n) Vertragsstaat(en): DE, FR, GB, ES, SE)

1. Gelenk zum Verbinden von zwei Teilen eines Aufbaus und zum Dämpfen der zwischen ihnen übertragenen Schwingungen, wobei das Gelenk ein Organ zum Verbinden mit dem Boden eines Fahrzeugs mit einem Hauptaufbau des Fahrzeugs verbinden kann, wobei das Gelenk einen äußeren Beschlag (1) und einen inneren Beschlag (3) mit jeweils einer Längsachse aufweist, die umeinander herum angeordnet sind und an dem einen beziehungsweise dem anderen der zu verbindenden Teile befestigt werden, sowie ein erstes elastisch verformbares Element (6), das derart zwischen den Beschlägen angeordnet ist, dass es eine relative Querbewegung zwischen ihnen erlaubt, wobei ein zweites elastisch verformbares Element (24) zwischen dem ersten elastisch verformbaren Element (6) und dem inneren Beschlag angeordnet ist, wobei das Gelenk einen mittleren Beschlag (2) aufweist, der zwischen dem ersten (6) und dem zweiten elastisch verformbaren Element (24) angeordnet ist, wobei das erste und das zweite elastisch verformbare Element am mittleren Beschlag (2) haftend gemacht sind, wobei das zweite elastisch verformbare Element am inneren Beschlag haftend gemacht ist, **dadurch gekennzeichnet, dass** das Gelenk ein hydroelastisches Gelenk ist, in dem das erste elastisch verformbare Element (6) so ausgebildet ist, dass es mindestens einen dichten Raum (9) zwischen dem äußeren Beschlag und dem mittleren Beschlag festlegt, der eine Dämpfflüssigkeit (8) enthält, und eine Einheit (5) bildet, die wie eine hydroelastische Feder zwischen dem äußeren Beschlag und dem mittleren Beschlag wirkt, wobei das zweite elastisch verformbare Element (24) eine kleinere Längsabmessung als eine entsprechende Längsabmessung des ersten elastisch verformbaren Elements (6) aufweist, sodass eine Querverformung des ersten elastisch verformbaren Elements (6) bei einem relativen Kippen der Längsachsen der Beschläge um mindestens eine quer verlaufende Kippachse (D) begrenzt wird, wobei der innere Beschlag und der mittlere Beschlag jeweils einen zylindrischen zentralen Abschnitt aufweisen.

2. Hydroelastisches Gelenk nach Anspruch 1, **dadurch gekennzeichnet, dass** das erste elastisch verformbare Element (6) zwei Endwände (13, 14) aufweist, zwischen denen der dichte Raum (9) festgelegt ist, wobei das erste elastisch verformbare Element zumindest auf der Höhe der Endwände (13, 14) mit einem peripherischen Versteifungsbeschlag (7, 20, 21) versehen ist, um einen Beschlag (1) durch Einstecken ohne Haftendmachung so aufzunehmen, dass für die Dichtheit des Raums der Dämpfflüssigkeit gesorgt ist.

3. Hydroelastisches Gelenk nach einem der Ansprüche 1 bis 2, **dadurch gekennzeichnet, dass** die Endwände (13, 14) den mittleren Beschlag (2) und den äußeren Beschlag in dichter Weise verbinden, sodass der dichte Raum (9) zwischen dem mittleren Beschlag (2) und dem äußeren Beschlag (1) festgelegt ist, wobei das erste elastisch verformbare Element den äußeren Beschlag (1) durch Einstecken ohne Haftendmachung aufnimmt.

4. Hydroelastisches Gelenk nach einem der Ansprüche 1 bis 3, **dadurch gekennzeichnet, dass** der dichte Raum (9) in mindestens zwei Kammern (17a, 17b) unterteilt ist, die einander in einer ersten Querrichtung (B) gegenüberliegen, welche eine Richtung der hydraulischen Dämpfung der als hydroelastische Feder wirkenden Einheit (5) festlegt, wobei die Einheit ein Mittel (16a, 16b, 19) aufweist, das die Kammern miteinander verbindet, sodass die zwischen den Beschlägen übertragenen Schwingungen zumindest in der ersten Querrichtung (B) hydraulisch gedämpft werden.

5. Hydroelastisches Gelenk nach Anspruch 4 in Kombination mit Anspruch 3, **dadurch gekennzeichnet, dass** das erste elastisch verformbare Element (6) zwei Längsbuckel (15a, 15b) aufweist, welche die beiden Endwände (13, 14) derart verbinden, dass die beiden Kammern (17a, 17b) voneinander getrennt werden, wobei die Mittel zum Verbinden der beiden Kammern mindestens eine Ventillippe (16a, 16b) umfassen, die an mindestens einem der Längsbuckel derart befestigt ist, dass sie in Kontakt mit dem äußeren Beschlag (1) kommt, wobei die Ventillippe sich derart umbiegen kann, dass die Kammern verbunden werden, wenn ein Druckunterschied zwischen den Kammern einen Grenzwert überschreitet.

6. Hydroelastisches Gelenk nach Anspruch 4 in Kombination mit Anspruch 3 oder nach Anspruch 5, **dadurch gekennzeichnet, dass** das erste elastisch verformbare Element zwei Anschläge (18a, 18b) aufweist, die im Wesentlichen in der Mitte jeder Kammer (17a, 17b) vorspringen, um eine Bewegung zwischen dem äußeren Beschlag (1) und dem mittleren Beschlag (2) in der ersten Querrichtung (B) zu begrenzen.

7. Hydroelastisches Gelenk nach Anspruch 6, **dadurch gekennzeichnet, dass** die Anschläge (18a, 18b) in Querrichtung zwischen dem mittleren Beschlag und dem äußeren Beschlag vorkomprimiert sind.

8. Hydroelastisches Gelenk nach einem der Ansprüche 1 bis 7, **dadurch gekennzeichnet, dass** das zweite elastisch verformbare Element (24) zumindest in einer zweiten Querrichtung (H) eine geringere Steifheit aufweist, sodass senkrecht zur zweiten Querrichtung eine bevorzugte quer verlaufende Kippachse (D) für das relative Kippen der Achsen des äußeren und inneren Beschlags festgelegt wird.

9. Hydroelastisches Gelenk nach Anspruch 4 in Kombination mit Anspruch 8, **dadurch gekennzeichnet, dass** die erste Querrichtung (B) und die zweite Querrichtung (H) parallel sind.

10. Hydroelastisches Gelenk nach Anspruch 4 in Kombination mit Anspruch 8, **dadurch gekennzeichnet, dass** die erste Querrichtung (B) und die zweite Querrichtung (H) einen Winkel (θ) bilden.

11. Hydroelastisches Gelenk nach einem der Ansprüche 8 bis 10, **dadurch gekennzeichnet, dass** das zweite elastisch verformbare Element (24) mindestens zwei Aushöhlungen (31, 32) aufweist, die im Wesentlichen längs verlaufen und einander in der zweiten Querrichtung (H) gegenüberliegen.

12. Hydroelastisches Gelenk nach einem der Ansprüche 1 bis 11, **dadurch gekennzeichnet, dass** das erste (6) und das zweite elastisch verformbare Element (24) in einem einzigen Gießschritt erhalten werden.

13. Hydroelastisches Gelenk nach einem der Ansprüche 1 bis 12, **dadurch gekennzeichnet, dass** der innere Beschlag (3) im Wesentlichen rohrförmig ist und einen verdickten und/oder erweiterten Wandabschnitt auf der Höhe von mindestens einem seiner Längsenden (34, 35) aufweist, um eine Fläche vermehrten Kontakts mit dem Teil, an dem der innere Beschlag befestigt werden muss, oder mit einem Mittel zum Befestigen des inneren Beschlags an diesem Teil zu bieten.

14. Hydroelastisches Gelenk nach einem der Ansprüche 1 bis 13, **dadurch gekennzeichnet, dass** es mindestens einen äußeren Abschnitt (30) aufweist, der sich auf eines der zu verbindenden Teile stützen kann, um eine Verformung des Gelenks über einen festgelegten Grenzausschlag hinaus zu verhindern.

15. Kraftfahrzeugachse mit einem Balken (52), der symmetrisch an jedem seiner Enden einen Radträger trägt, wobei der Balken symmetrisch mit zwei Gelenken (55a, 55b) versehen ist, um ihn mit einem Hauptaufbau eines Kraftfahrzeugs zu verbinden und Schwingungen zu dämpfen, **dadurch gekennzeichnet, dass** die Gelenke hydroelastische Gelenke nach einem der Ansprüche 1 bis 14 sind.

16. Achse nach Anspruch 15, **dadurch gekennzeichnet, dass** die Gelenke derart an dem Balken befestigt sind, dass eine Achse jedes der Gelenke einen Winkel (α) größer 20° mit einer Richtung (Y) bildet, die von den beiden Radträgern festgelegt ist.
